# FASCICULE DE BREVET EUROPEEN

(11) **EP 1 972 756 B1**
(45) Date de publication et mention de la délivrance du brevet: **15.09.2010**
(21) Numéro de dépôt: 08102677.5
(22) Date de dépôt: 17.03.2008
(51) Int. Cl.: F01D 9/06, F01D 25/16

(54) **Carter inter-turbine avec circuit de refroidissement et turboréacteur le comportant**
Interturbinen-Gehäuse mit Kühlkreislauf und dieses umfassendes Turbostrahltriebwerk
Inter-turbine casing with cooling circuit and jet engine comprising same

(30) Priorité: 20.03.2007 FR 0702020
(43) Date de publication de la demande: 24.09.2008
(73) Titulaire: Snecma, 75015 Paris (FR)
(72) Inventeur: Guimbard, Jean-Michel, 77930 Cely En Biere (FR); Pabion, Philippe, 77000 Vaux Le Penil (FR); Prestel, Sébastien, 91290 Arpajon (FR); Soupizon, Jean-Luc, 77000 Vaux Le Penil (FR)
(74) Mandataire: David, Daniel

(56) Documents cités:
- US-A- 5 609 467
- US-A1- 2004 111 829
- US-A1- 2006 123 796

## Description

La présente invention concerne le domaine des turbomachines et se rapporte en particulier au refroidissement des turbines d'un turboréacteur. Elle vise plus particulièrement un dispositif d'étanchéité destiné à être mis en oeuvre dans un circuit de refroidissement des turbines du turboréacteur au niveau du carter inter-turbine du turboréacteur. Elle vise un carter inter-turbine équipé d'un tel dispositif d'étanchéité. Elle vise enfin un turboréacteur comportant un tel dispositif d'étanchéité et/ou un tel carter inter-turbine.

Dans tout ce qui suit, les termes « axial » et « radial » se rapportent à une direction axiale et à une direction radiale du turboréacteur.

Un turboréacteur double flux d'un aéronef comporte, de manière connue, une veine primaire d'écoulement des gaz et une veine secondaire d'écoulement des gaz, qui sont séparées par un compartiment interveine d'un carter dit "carter inter-turbine". Dans la veine primaire sont disposés, d'amont en aval dans le sens d'écoulement des gaz, un compresseur à basse pression et un compresseur à haute pression. L'air ainsi comprimé est amené à une chambre de combustion dans laquelle il est mélangé à du carburant sous pression qui est brûlé pour fournir, en aval de la chambre de combustion, de l'énergie à une turbine à haute pression qui entraîne le compresseur à haute pression, puis à une turbine à basse pression qui entraîne la soufflante et le compresseur à basse pression. Les gaz en sortie des turbines fournissent une poussée résiduelle qui s'ajoute à la poussée générée par les gaz circulant dans la veine secondaire afin d'assurer la propulsion de l'aéronef.

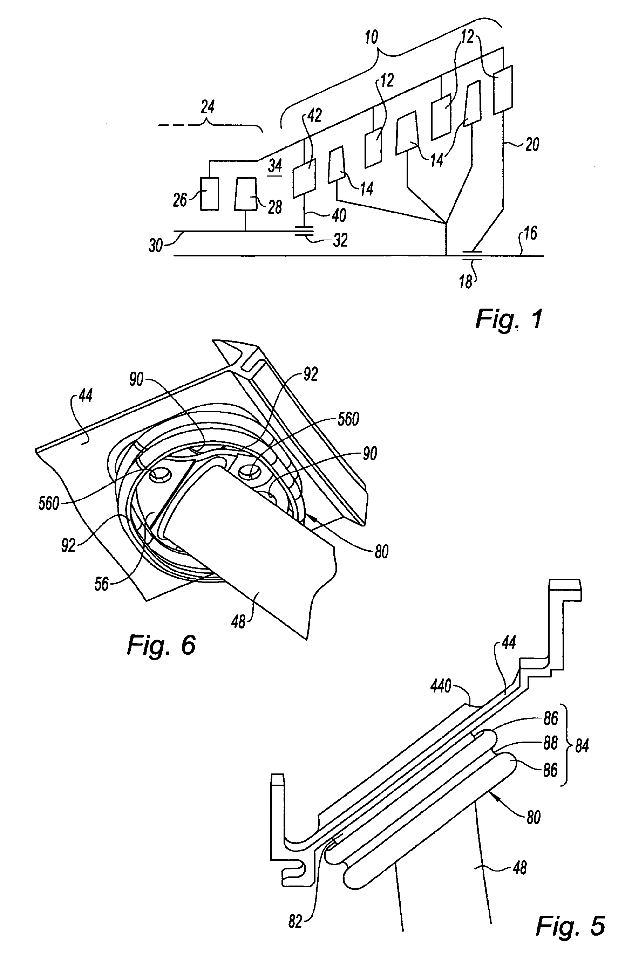

La figure 1 illustre, de manière schématique, une architecture connue des turbines d'un turboréacteur. La turbine à basse pression 10 comporte des pales de stator 12 et des pales de rotor 14. Les pales de rotor 14 entraînent un arbre 16 tournant dans un palier 18 supporté, à l'extrémité aval de ladite turbine à basse pression 10, par un carter d'échappement 20 s'étendant radialement jusqu'au carter extérieur 22. La turbine à haute pression 24 comporte des pales de stator 26 et des pales de rotor 28. Les pales de rotor 28 entraînent un arbre 30 tournant dans un palier 32 supporté, à l'extrémité amont de la turbine à basse pression 10, par un carter inter-turbine 40 s'étendant radialement jusqu'au carter extérieur 20, dans l'espace inter-turbine 34. Une telle architecture de turbines, dans laquelle la turbine à haute pression est maintenue sur le stator de la turbine à basse pression, a pour avantage connu de permettre une maîtrise améliorée des déplacements relatifs des deux turbines, ce qui permet de réduire les jeux de fonctionnement par rapport à d'autres architectures de turbines.

Le carter inter-turbine 40 est une pièce structurale qui comporte, de manière connue, une virole extérieure faisant partie du carter extérieur et une virole intérieure faisant partie du carter intérieur ou moyeu sur lequel est fixé le support de palier d'arbre de turbine à haute pression. Le carter inter-turbine comporte aussi un certain nombre de bras radiaux qui sont des pièces structurales reliant la virole extérieure et la virole intérieure. Il comporte également des carénages 42 ayant une forme profilée qui sont disposés dans le canal d'air aérodynamique, afin de distribuer le flux d'air issu de la turbine à haute pression avant qu'il n'atteigne le premier étage de turbine à basse pression. Les bras radiaux sont de préférence disposés à l'intérieure de certains de ces carénages, ou dans la totalité de ces carénages.

Il est nécessaire de refroidir les pièces sollicitées thermiquement, telles que les rotors de turbines, les carénages et les bras radiaux. A cet effet, il est connu d'acheminer de l'air de refroidissement prélevé dans une partie plus froide du turboréacteur, à travers la virole extérieure, les carénages, et les viroles intérieures. Cependant, compte tenu des dilatations auxquelles sont soumises les pièces en fonctionnement, les carénages sont sectorisés, ce qui permet un jeu de fonctionnement entre les différents secteurs. Mais ces jeux de fonctionnement sont également des sources de fuites parasites par lesquelles s'échappe une partie de l'air de refroidissement. De telles fuites entraînent un déficit de performance du circuit de refroidissement, car la quantité d'air de refroidissement n'est pas optimisée. Il en résulte une réduction de la durée de vie des pièces refroidies ou la nécessité d'augmenter le débit d'air de refroidissement.

Divers dispositifs, comme ceux mentionnés dans le brevet US 5,609,467 ou la demande de brevet US 2004/0111829 A1 ont été proposés. US 5,609,467 décrit un carter muni d'un dispositif d'étanchéité situé entre une virole et une entretoise.

L'invention a pour but de remédier aux inconvénients ci-dessus mentionnés, et propose un agencement de circuit de refroidissement qui minimise les fuites d'air de refroidissement.

L'invention se rapporte à un carter inter-turbine d'un turboréacteur, le carter inter-turbine comportant une virole extérieure et une virole intérieure ainsi qu'une virole intermédiaire entre la virole intérieure et la virole extérieure, les viroles intérieure et intermédiaire comportant des ouvertures respectives pour le passage d'air de refroidissement. Selon l'invention, le carter est caractérisé en ce qu'il comporte au moins un dispositif d'étanchéité disposé entre la virole extérieure et la virole intermédiaire avec une semelle dotée d'au moins un orifice de passage d'air de refroidissement et une jupe périphérique apte à se comprimer et à se détendre élastiquement, la semelle étant en appui contre la virole extérieure et la jupe périphérique étant en appui contre la virole intermédiaire .

Selon une caractéristique additionnelle, le carter inter-turbine comporte en outre des bras structuraux qui passent à travers lesdites ouvertures respectives de la virole intérieure et de la virole intermédiaire, et le dispositif d'étanchéité est installé entre une extrémité de l'un des bras radiaux et ladite virole extérieure.

Selon une autre caractéristique additionnelle, le dispositif d'étanchéité est installé de telle façon que ledit orifice de la semelle se trouve en regard d'une ouverture de la virole extérieure.

Selon une autre caractéristique additionnelle, le dispositif d'étanchéité est installé de telle façon que la jupe périphérique entoure une ouverture de la virole intermédiaire. De préférence, le dispositif d'étanchéité est installé de telle façon que sa jupe périphérique est précontrainte en compression. En particulier, le dispositif d'étanchéité est fixé à une platine d'extrémité de l'un des bras structuraux par des vis traversant des trous de fixation ménagés dans sa semelle.

Selon l'invention, le carter inter-turbine est équipé, en outre, de chemises disposées entre la virole intermédiaire et la virole intérieure, chacune desdites chemises mettant en communication l'une des ouvertures respectives de la virole intermédiaire et l'une des ouvertures respectives de la virole intérieure. De préférence, chaque chemise est dotée de perforations latérales pour le passage d'air de refroidissement.

Selon un autre aspect, l'invention se rapporte à un turboréacteur, qui comporte au moins un carter inter-turbine.

L'invention sera mieux comprise à la lecture de la description détaillée qui va suivre d'un mode de réalisation particulier, fourni à titre indicatif et nullement limitatif, et illustré au moyen des dessins annexés, dans lesquels :
- la figure 1, déjà décrite, représente, de manière schématique et en coupe axiale, une architecture de turbines d'un turboréacteur dans laquelle s'applique l'invention ;
- la figure 2 représente, en coupe axiale, un carter inter-turbine équipé d'un dispositif d'étanchéité conformément à l'invention;
- les figures 3 et 4 représentent respectivement une vue en perspective supérieure et une vue en perspective inférieure d'un dispositif d'étanchéité conforme à l'invention; et
- les figures 5 et 6 sont deux vues, respectivement en coupe axiale et en perspective inférieure, d'un dispositif d'étanchéité installé sur une virole extérieure et fixé à un bras structural.

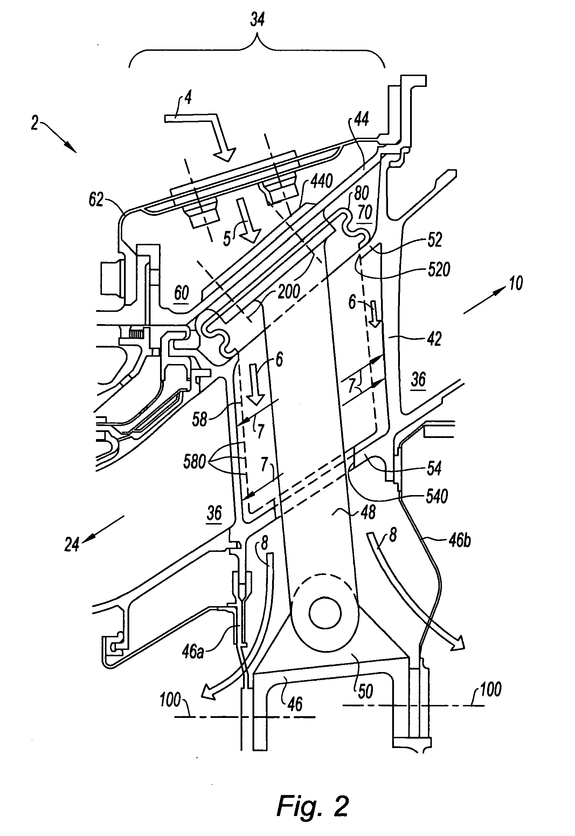

En se référant à la figure 2, il est représenté une partie d'un turboréacteur 2, et plus particulièrement l'espace inter-turbine 34 entre une turbine à basse pression 10 et une turbine à haute pression 24 dont les pales respectives (non représentées à la figure 2) s'étendent dans un canal d'air aérodynamique 36. Dans cet espace inter-turbine 34 est installé un carter inter-turbine 40 comportant, de manière connue en soi, une virole extérieure 44, une virole intérieure 46 fixée à un support de palier par des moyens de fixation, par exemple des vis, qui sont matérialisés par le repère 100, et des carénages 42 fixés à la virole extérieure 44 et à des flasques 46a, 46b solidaires de la virole intérieure 46; les carénages 42 sont en fait pincés, au niveau de leur extrémité interne, entre ces flasques 46a, 46b. Ces carénages 42 ont notamment pour fonction de distribuer le flux d'air issu de la turbine à haute pression 24 avant qu'il n'atteigne le premier étage de turbine à basse pression 10. Ces carénages 42 s'étendent dans le canal d'air aérodynamique 36 en amont des pales 12 de la turbine à basse pression 10. Ils sont délimités par une virole intermédiaire extérieure 52 et une virole intermédiaire intérieure 54.

Le carter inter-turbine 40 est équipé de bras radiaux 48 qui sont des pièces structurales. Ces bras radiaux 48 traversent la virole intermédiaire intérieure 54 qui présente à cet effet des ouvertures 540, ainsi que la virole intermédiaire supérieure 52 qui présente à cet effet des ouvertures 520. Chaque bras radial 48 présente une extrémité articulée sur la virole intérieure 46, par exemple au moyen d'une chape 50. Chaque bras radial 48 présente une autre extrémité fixée sur la virole extérieure 44 au moyen d'une platine de fixation 56 et de moyens de fixation usuels, par exemple des vis matérialisées par le repère 200 à la figure 2 qui traversent des trous de fixation 560 de la platine de fixation 56 (voir figure 6).

Le carter inter-turbine 40 est en outre doté de chemises 58. Chaque chemise 58 est disposée à l'intérieur de l'un des carénages 42 autour d'un bras radial 48, et relie une ouverture 520 de la virole intermédiaire extérieure 52 avec une ouverture 540 de la virole intermédiaire intérieure 54. Chaque chemise 58 est en outre dotée de performations latérales 580 qui se trouvent disposées en face du carénage 42 correspondant.

Le circuit de refroidissement va maintenant être décrit en se référant à la figure 2. L'air de refroidissement prélevé dans une partie plus froide du turboréacteur, par exemple le compresseur haute pression, est acheminé comme indiqué par la flèche 4 jusqu'à une première enceinte 60 définie entre la virole extérieure 44 et un collecteur 62 fixé autour de ladite virole extérieure 44. L'air de refroidissement traverse ensuite la virole extérieure 44 qui est à cet effet munie d'ouvertures 440, comme indiqué par la flèche 5, jusqu'à une deuxième enceinte 70 définie entre la virole extérieure 44 et la virole intermédiaire extérieure 52. L'air de refroidissement traverse ensuite la virole intermédiaire extérieure 52 à travers ses ouvertures 520. Puis il est conduit à l'intérieur des chemises 58 autour des bras radiaux 48, comme indiqué par les flèches 6, et une partie de cet air est envoyée sur les carénages 42 à travers les perforations 580 des chemises 58, afin de refroidir lesdits carénages 42, comme indiqué par les flèches 7. La plus grande partie de l'air de refroidissement traverse la virole intermédiaire intérieure 54 à travers ses ouvertures 540, pour être ensuite acheminée vers les parties intérieures du turboréacteur 2 afin de les refroidir, comme indiqué par les flèches 8.

Il est nécessaire de réduire le plus possible les fuites parasites de ce circuit de refroidissement, afin de garantir qu'une quantité importante de l'air de refroidissement qui est introduit dans la première enceinte 60 (flèche 4) parvient jusqu'aux parties chaudes intérieures des turbines (flèches 8). La présence des chemises 58 à l'intérieur des carénages 42 entre la virole intermédiaire extérieure 52 et la virole intermédiaire intérieure 54 contribue à éviter de telles fuites au niveau du canal d'air aérodynamique 36.

Il est également nécessaire de limiter les fuites potentielles au niveau de la deuxième enceinte 70. A cet effet, le carter inter-turbine 40 est doté de dispositifs d'étanchéité 80 installés dans ladite deuxième enceinte 70, qui vont maintenant être décrits en référence aux figures 2 à 6.

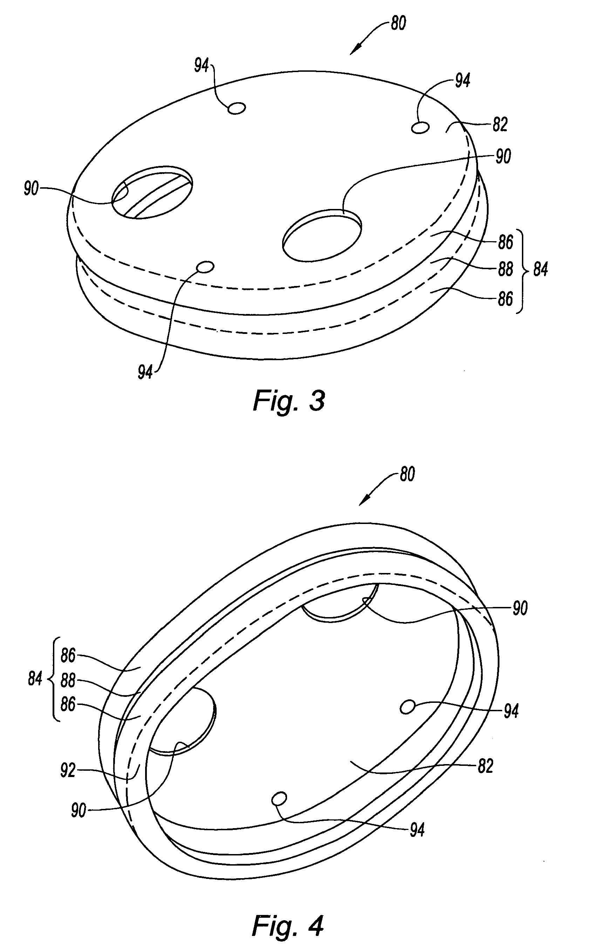

Comme illustré sur les figures 3 et 4 qui le représentent respectivement en perspective supérieure et en perspective inférieure, chaque dispositif d'étanchéité 80 comporte une semelle 82 et une jupe périphérique 84. La semelle 82 se présente sous la forme d'une plaque sensiblement plane et s'inscrivant dans un cercle. La jupe périphérique 84 s'étend à partir de la périphérie de ladite semelle 82, suivant une direction sensiblement perpendiculaire au plan de ladite semelle 82, et se présente sous la forme d'un soufflet. Sur l'exemple illustré, ce soufflet comporte deux parties en saillie 86 séparées par une partie en retrait 88, mais il pourrait comporter un nombre différent de parties en saillie et de parties en retrait. En outre, le dispositif d'étanchéité 80 est doté de trous 90, qui sont au nombre de deux sur l'exemple illustré.

La jupe périphérique 84 est apte à se comprimer et à se détendre élastiquement. L'extrémité libre de la jupe périphérique 84 est recourbée vers l'intérieur, de telle sorte qu'elle réalise un rebord 92 sensiblement plan et sensiblement parallèle à la semelle 82. Lorsque le dispositif d'étanchéité est installé dans la deuxième enceinte 70, comme illustré sur la figure 2, la semelle 82 se trouve en appui contre la face intérieure de la virole extérieure 44, en regard de l'une des ouvertures 440 de ladite virole extérieure 44, tandis que le rebord 92 se trouve en appui contre la face extérieure de la virole intermédiaire extérieure 52 et entoure l'une des ouvertures 520 de ladite virole intermédiaire extérieure 52. Ainsi, le bord libre 92 (rebord 92) de la jupe périphérique 84 forme une zone d'appui sur la face extérieure de la virole intermédiaire extérieure 52; cette zone d'appui peut consister, par exemple, en une génératrice, si le rebord 92 est courbé de sorte que le contact se fait le long d'une ligne, ou en une surface, si le rebord 92 est formé de sorte que le contact est surfacique.

Le dispositif d'étanchéité 80 est installé dans ladite deuxième enceinte 70 en étant précontraint en compression. Une telle configuration élastique du dispositif d'étanchéité présente pour avantage de garantir une étanchéité satisfaisante entre la virole extérieure 44 et la virole intermédiaire extérieure 52 (voir figure 2). Ainsi, l'air de refroidissement qui traverse l'ouverture 440 de la virole extérieure 44 passe aussi à travers les orifices 90 du dispositif d'étanchéité 80 et reste contenu, au niveau de la deuxième enceinte 70, dans le volume défini par le dispositif d'étanchéité 80. Autrement dit, l'air de refroidissement ne peut s'échapper latéralement dans la deuxième enceinte 70. Un avantage supplémentaire d'une telle configuration réside dans le fait que le dispositif d'étanchéité 80 est apte à absorber à la manière d'un ressort les déplacements relatifs entre ladite virole extérieure 44 et ladite virole intermédiaire extérieure 52.

Les figures 5 et 6 représentent, respectivement en vue latérale et en perspective inférieure, la fixation d'un dispositif d'étanchéité 80 sur la virole extérieure 44, par l'intermédiaire d'un bras radial 48. La figure 6 illustre de manière plus détaillée que la figure 2 la fixation de la platine 56 sur la virole extérieure 44 au moyen de trous 560 destinés à recevoir des vis de fixation 200 (non représentées à la figure 6). La semelle 82 comporte des trous 94 destinés à recevoir les vis de fixation 200, ménageant un passage pour ces vis de fixation 200. La platine de fixation 56 du bras radial 48 présente une forme adaptée pour offrir une surface de fixation étendue sans recouvrir les orifices 90 de la semelle 82 du dispositif d'étanchéité 80.

## Revendications

1. Carter inter-turbine (40) de turboréacteur (2), comportant une virole extérieure (44), une virole intérieure (54) et une virole intermédiaire (52) positionnée radialement entre la virole intérieure et la virole extérieure, les viroles intérieure (54) et intermédiaire (52) comportant des ouvertures respectives (540, 520) pour le passage d'air de refroidissement, comportant au moins un dispositif d'étanchéité (80) disposé radialement entre la virole extérieure (44) et la virole intermédiaire (52) formant conduit de guidage dudit air de refroidissement entre lesdites viroles extérieure et intermédiaire, ledit dispositif comportant en outre une semelle (82) dotée d'au moins un orifice (90) de passage d'air de refroidissement et une jupe périphérique (84) apte à se comprimer et à se détendre élastiquement, la semelle (82) étant en appui contre la virole extérieure (44) et la jupe périphérique (84) étant en appui contre la virole intermédiaire (52).

2. Carter inter-turbine selon la revendication 1, dont la jupe périphérique (84) s'étend à partir de ladite semelle (82) suivant une direction sensiblement perpendiculaire au plan de ladite semelle (82).

3. Carter inter-turbine selon la revendication 1 ou 2, dont la jupe périphérique (84) a un bord libre (92) qui est recourbé vers l'intérieur de manière formant une face d'appui.

4. Carter inter-turbine selon l'une quelconque des revendications 1 à 3 dont le dispositif d'étanchéité comporte des moyens de fixation disposés sur la semelle avec des trous (94) traversant ladite semelle et recevant des vis de fixation (200).

5. Carter inter-turbine selon la revendication 1, comportant en outre des bras structuraux (48) qui passent à travers lesdites ouvertures respectives (540, 520) de la virole intérieure (54) et de la virole intermédiaire (52), dont ledit dispositif d'étanchéité (80) est installé entre une extrémité de l'un des bras radiaux (48) et ladite virole extérieure (44).

6. Carter inter-turbine selon la revendication 5 dont ledit dispositif d'étanchéité (80) est installé de telle façon qu'au moins un orifice (90) de la semelle (82) se trouve en regard d'une ouverture (440) de la virole extérieure (44).

7. Carter inter-turbine selon l'une des revendications 1 à 6, dont le dispositif d'étanchéité (80) est installé de telle façon que la jupe périphérique (84) entoure une ouverture (520) de ladite virole intermédiaire (52).

8. Carter inter-turbine selon l'une quelconque des revendications 1 à 7, dont le dispositif d'étanchéité (80) est installé de telle façon que sa jupe périphérique (84) est précontrainte en compression.

9. Carter inter-turbine selon la revendication 4 dont le dispositif d'étanchéité (80) est fixé à une platine d'extrémité (56) de l'un des bras structuraux (48) par des vis traversant les trous de fixation (94) ménagés dans sa semelle (82).

10. Carter inter-turbine (40) selon l'une quelconque des revendication 1 à 9, comprenant, en outre, des chemises (58) disposées entre la virole intermédiaire (52) et la virole intérieure (54), chacune desdites chemises (58) mettant en communication l'une des ouvertures respectives (520) de la virole intermédiaire (52) et l'une des ouvertures respectives (540) de la virole intérieure (54).

11. Carter inter-turbine (40) selon la revendication 10, dont lesdites chemises (58) sont dotées de perforations latérales (580) pour le passage d'air de refroidissement.

12. Turboréacteur (2) comportant au moins un carter inter-turbine (40) selon l'une quelconque des revendications 1 à 11.

## Claims

1. An inter-turbine casing (40) for a turbofan (2), comprising an outer ring (44), an inner ring (54), and an intermediate ring (52) placed radially between the inner ring and the outer ring, the inner (54) and intermediate (52) rings having respective openings (540, 520) for the passage of cooling air, wherein the casing comprises at least one sealing device (80), arranged radially between the outer ring (44) and the intermediate ring (52) forming a guiding conduct of said cooling air between said outer and intermediate ring, said device comprising furthermore a base (82), provided with at least one orifice (90) for the passage of cooling air, and a peripheral skirt (84) which is able to be compressed and expanded elastically, the base (82) bearing against the outer ring (44) and the peripheral skirt (84) bearing against the intermediate ring (52).

2. The inter-turbine casing as claimed in claim 1, wherein the peripheral skirt (84) extends from said base (82) in a substantially perpendicular direction to the plane of said base (82).

3. The inter-turbine casing as claimed in claim 1 or 2, wherein the peripheral skirt (84) has a free edge(92) which is curved inwardly so as to form a bearing face.

4. The inter-turbine casing as claimed in any one of claims 1 to 3, wherein the sealing device comprises fastening means, arranged on the base, with holes (94) passing through said base and accommodating fastening bolts (200).

5. The inter-turbine casing as claimed in claim 1, additionally comprising structural arms (48) which pass through said respective openings (540, 520) in the inner ring (54) and intermediate ring (52), wherein said sealing device (80) is installed between one end of one of the radial arms (48) and said outer ring (44).

6. The inter-turbine casing as claimed in claim 5, wherein said sealing device (80) is installed such that at least one orifice (90) in the base (82) is situated opposite an opening (440) in the outer ring (44).

7. The inter-turbine casing as claimed in one of claims 1 to 6, wherein the sealing device (80) is installed such that the peripheral skirt (84) surrounds an opening (520) in said intermediate ring (52).

8. The inter-turbine casing as claimed in any one of claims 1 to 7, wherein the sealing device (80) is installed such that its peripheral ski(84) is prestressed in compression.

9. The inter-turbine casing as claimed in claim 4, wherein the sealing device(80) is fastened to an end plate (56) of one of the structural arms (48) by bolts passing through the fastening holes (94) formed in its base (82).

10. The inter-turbine casing (40) as claimed in any one of claims 1 to 9, additionally comprising sleeves(58) arranged between the intermediate ring (52) and the inner ring (54), each of said sleeves (58) bringing one of the respective openings (520) in the intermediate ring (52) into communication with one of the respective openings (540) in the inner ring (54).

11. The inter-turbine casing(40) as claimed in claim 10, wherein said sleeves (58) are provided with lateral perforations(580) for the passage of cooling air.

12. A turbofan (2) comprising at least one inter-turbine casing (40) as claimed in any one of claims 1 to 11.

## Patentansprüche

1. Im Turbinenzwischenraum gelegenes Gehäuse (40) eines Strahltriebwerks (2), aufweisend einen äußeren Ring (44), einen inneren Ring (54) und einen Zwischenring (52), der radial zwischen dem inneren Ring und dem äußeren Ring angeordnet ist, wobei der innere (54) und der Zwischenring (52) jeweils Öffnungen (540, 520) zum Durchlass von Kühlungsluft aufweisen, aufweisend mindestens eine Dichtigkeitsvorrichtung (80), die radial zwischen den äußeren Ring (44) und dem Zwischenring (52) angeordnet ist und eine Leitung zum Führen der Kühlungsluft zwischen dem äußeren und dem Zwischenring bildet, wobei die Vorrichtung darüber hinaus eine Unterlegplatte (82), die mit mindestens einer Öffnung (90) zum Durchlass von Kühlungsluft versehen ist, und eine Randschürze (84), die sich elastisch komprimieren und ausdehnen kann, aufweist, wobei die Unterlegplatte (82) gegen den äußeren Ring (44) drückt und die Randschürze (84) gegen den Zwischenring (52) drückt.

2. Im Turbinenzwischenraum gelegenes Gehäuse nach Anspruch 1, wobei dessen Randschürze (84) sich von der Unterlegplatte (82) entlang einer Richtung erstreckt, im Wesentlichen einen rechten Winkel zur Ebene der Unterlegplatte (82) bildet.

3. Im Turbinenzwischenraum gelegenes Gehäuse nach den Ansprüchen 1 oder 2, wobei dessen Randschürze (84) einen offenliegenden Rand (92) hat, der nach innen gekrümmt ist, um eine Auflagefläche zu binden.

4. Im Turbinenzwischenraum gelegenes Gehäuse nach einem beliebigen der Ansprüche 1 bis 3, wobei dessen Dichtigkeitsvorrichtung Befestigungsmittel aufweist, die auf der Unterlegplatte angeordnet sind, wobei die Unterlegplatte von Löchern (94) durchzogen ist, die Befestigungsschrauben (200) aufnehmen.

5. Im Turbinenzwischenraum gelegenes Gehäuse nach Anspruch 1, das darüber hinaus Stützarme (48) aufweist, welche sich durch die Öffnungen (540, 520) des inneren Rings (54) beziehungsweise den Zwischenrings (52) erstrecken, wobei dessen Dichtigkeitsvorrichtung (80) zwischen einem Ende eines der radialen Arme (48) und dem äußeren Ring (44) angeordnet ist.

6. Im Turbinenzwischenraum gelegenes Gehäuse nach Anspruch 5, wobei dessen Dichtigkeitsvorrichtung (80) derart angeordnet ist, dass sich mindestens eine Öffnung (90) der Unterlegplatte (82) gegenüber einer Öffnung (440) des äußeren Rings (44) befindet.

7. Im Turbinenzwischenraum gelegenes Gehäuse nach einem der Ansprüche 1 bis 6, wobei dessen Dichtigkeitsvorrichtung (80) derart angeordnet ist, dass die Randschürze (84) eine Öffnung (520) des Zwischenrings (52) umgibt.

8. Im Turbinenzwischenraum gelegenes Gehäuse nach einem der Ansprüche 1 bis 7, wobei dessen Dichtigkeitsvorrichtung (80) derart angeordnet ist, dass ihre Randschürze (84) unter Druckeinwirkung vorgespannt wird.

9. Im Turbinenzwischenraum gelegenes Gehäuse nach Anspruch 4, wobei dessen Dichtigkeitsvorrichtung (80) an einer endständigen Platte (56) eines der Stützarme (48) befestigt ist, und zwar mit Schrauben, die sich durch die Befestigungslöcher (94) erstrecken, welche in dessen Unterlegplatte (82) ausgespart sind.

10. Im Turbinenzwischenraum gelegenes Gehäuse (40) nach einem beliebigen der Ansprüche 1 bis 9, das darüber hinaus Auskleidungen (58) aufweist, die zwischen dem Zwischenring (52) und dem inneren Ring (54) angeordnet sind, wobei jede der Auskleidungen (58) eine der Öffnungen (520) des Zwischenrings (52) mit jeweils einer der Öffnungen (540) des inneren Rings (54) verbindet.

11. Im Turbinenzwischenraum gelegenes Gehäuse (40), wobei dessen Auskleidungen (58) mit seitlichen Perforationen (580) zum Durchlass von Kühlungsluft versehen sind.

12. Strahltriebwerk (2), das mindestens ein im Turbinenzwischenraum gelegenes Gehäuse (40) nach einem beliebigen der Ansprüche 1 bis 11 aufweist.
